# EUROPEAN PATENT SPECIFICATION

(11) **EP 2 088 352 B1**
(45) Date of publication and mention of the grant of the patent: **17.07.2013**
(21) Application number: 07791204.6
(22) Date of filing: 24.07.2007
(51) Int. Cl.: F16J 15/32, F16J 3/04, B62D 1/16

(54) **SEALING DEVICE**
DICHTUNGSVORRICHTUNG
DISPOSITIF D'ÉTANCHÉITÉ

(30) Priority: 21.11.2006 JP 2006314194
(43) Date of publication of application: 12.08.2009
(73) Proprietor: NOK Corporation, Minato-ku Tokyo 105-8585 (JP)
(72) Inventor: KANZAKI, Go, Fukushima-shi Fukushima 960-1102 (JP); MUNEKATA, Shinobu, Fukushima-shi Fukushima 960-1102 (JP); KOBAYASHI, Naoto, Fukushima-shi Fukushima 960-1102 (JP); TARUKAWA, Yuichi, Fukushima-shi Fukushima 960-1102 (JP)
(74) Representative: TBK
(86) International application number: PCT/JP2007/064472
(87) International publication number: WO 2008/062585

(56) References cited:
- EP-A1- 1 548 339
- JP-U- 02 138 278
- JP-U- 04 073 663
- JP-U- 54 163 268
- JP-Y1- 46 017 859

## Description

### BACKGROUND OF THE INVENTION

### Field of the Invention

The present invention relates to a sealing device, and more particularly to a sealing device which is suitable for being used as a steering dust seal. The sealing device in accordance with the present invention is used in a general purpose machine and the like in addition to a motor vehicle relevant field.

### Description of the Conventional Art

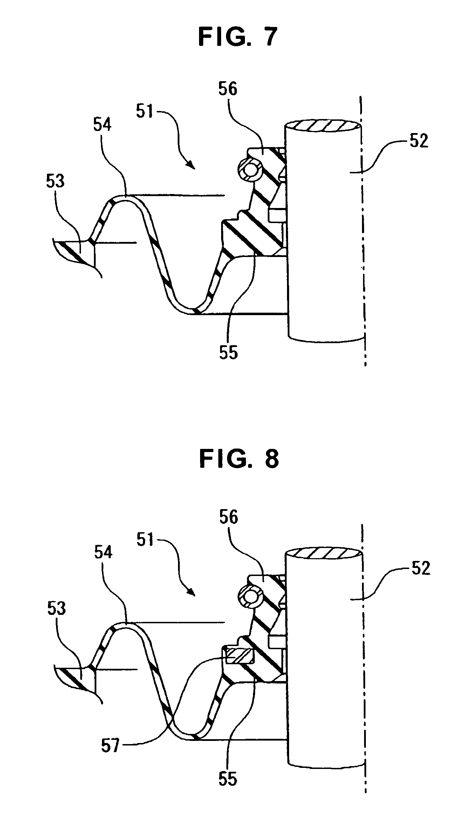

Conventionally, as shown in Fig. 7, there has been known a sealing device 51 for sealing between a housing (not shown) and a shaft 52 inserted to the housing, the sealing device 51 being structured such that a bumper portion 55 and a seal lip portion 56 are integrally formed at an inner peripheral side of an outer periphery attaching portion 53 fixed to the housing via a bellows-like flexible portion 54. The shaft 52 is, for example, a steering shaft of a motor vehicle, and the sealing device 51 is used for sealing dust or the like at an outer periphery of the steering shaft 52.

The steering shaft 52 may become eccentric with respect to the housing, and the sealing device 51 integrally has the bumper portion 55 and the flexible portion 54 so that the seal lip portion 56 follows the eccentricity. In other words, when the steering shaft 52 becomes eccentric, the bumper portion 55 follows the eccentricity and is displaced in a radial direction and the flexible portion 54 bends. Accordingly, the seal lip portion 56 keeps in close contact with the steering shaft 52 in a normal attitude, whereby it is possible to maintain a sealing function. The bumper portion 55 has an inner diameter which is somewhat larger than an outer diameter of the steering shaft 52 so as to be loosely fitted to the outer periphery of the steering shaft 52, receives an eccentric load of the shaft 52 when the shaft 52 becomes eccentric, and is displaced following it. Therefore, it is preferable that the bumper portion 55 is not elastically deformed so much, and a metal reinforcing ring 57 is sometimes embedded in an inner portion of the bumper portion 55 as shown in Fig. 8 so as to prevent an elastic deformation.

However, when the steering shaft 52 becomes eccentric as mentioned above, the steering shaft 52 strongly comes into close contact with an inner peripheral surface of the bumper portion 55 in a part on a circumference. Accordingly, a stick slip is caused at the bumper portion 55 which receives the eccentric load of the steering shaft 52, whereby a squealing noise (an abnormal noise) may be generated. The squealing noise tends to be generated in the case that the steering shaft 52 strongly rasps with a rubber (in a dry state).

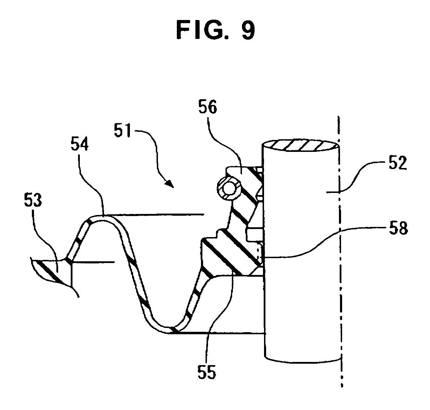

As a countermeasure to prevent the squealing noise mentioned above, the applicant of the present invention has proposed techniques that a lot of projections 58 are provided on the inner peripheral surface of the bumper portion 55 as shown in Fig. 9, that a low-friction slide member made of Teflon (trade mark) is provided, or that a canvas material is attached by bake bonding. In accordance with these prior arts, it is possible to effectively reduce generation of the squealing noise (refer to patent documents 1 and 2).

However, in the prior arts mentioned above, since the low-friction slide member is formed in a thin film shape and attached to the bumper portion 55 through a bake bonding process, in the case that the low-friction slide member made of Teflon (trade mark) is provided on the inner peripheral surface of the bumper portion 55, there is a disadvantage that it takes a lot of man hours and time to manufacture and attach the low-friction slide member.

Furthermore, a sealing device according to the preamble of claim 1 is known from EP 1 548 339 Al.
Patent Document 1: Japanese Unexamined Patent Publication No. 9-159031
Patent Document 2: Japanese Unexamined Patent Publication No. 10-26230

### SUMMARY OF THE INVENTION

### Problem to be Solved by the Invention

The present invention is made by taking the points mentioned above into consideration, and an object of the present invention is to provide a sealing device in which generation of a squealing noise can be effectively prevented at a time when a shaft such as a steering shaft or the like strongly comes into close contact with a bumper portion, and in addition, a slide member for preventing the squealing noise can be easily attached to the bumper portion.

### Means for Solving the Problem

According to the present invention, the above object is solved with a sealing device having the features of claim 1.

In the sealing device in accordance with claim 1 of the present invention, since a double sound insulating film structure constructed by the first molded product and the second molded product is achieved, the sealing device becomes excellent in a sound insulating property in addition to a sealing property. In the case of the steering dust seal, since it is extremely important to prevent an engine noise generated at an engine room side from being transmitted to a driver seat side, it is possible to comply with such demand by this sealing device. Further, in this case, the resin-made slide members are respectively fitted to the first molded product and the second molded product without being bonded.

In the case that the double sound insulating film structure is constructed by the first molded product and the second molded product such as claim 1 mentioned above, since an installing work of the sealing device has a directionality of installation (a directionality in an axial direction, that is, a direction of installation), there is anxiety that one molded product (the first molded product in the present invention) installed at a back position is hard to be installed. Then, in accordance with claim 1 of the present invention, the length in the axial direction and the outer diameter of the resin-made slide member are enlarged in this one molded product, whereby an installing workability can be secured. Since the resin-made slide member becomes hard to be deformed by enlarging of the length in the axial direction and the outer diameter thereof, and a handling property is improved, it is possible to improve the installing workability. In this case, if the length in the axial direction of the resin-made slide member is enlarged, there is anxiety that a contact area with the shaft is increased and a sliding resistance is increased. Accordingly, the structure is made such that the taper shape is provided in the inner peripheral surface of the resin-made slide member, and the inner peripheral surface comes into contact with the shaft only in part. In this case, the inner peripheral surface of the slide member is constructed by the combination of the taper shape and a cylindrical surface which is continuous to the small diameter side thereof, and only the small diameter cylindrical surface comes into contact with the shaft.

Further, in the present invention, the resin-made slide member fitted to the come-off prevention holding portion without being bonded is held in a state of being prevented from coming off, because the come-off prevention holding portion is formed in a groove shape or a step shape so as to be fitted to the resin-made slide member, or the resin-made slide member is held in a state of being prevented from coming off by setting of a fitting margin. However, in the case that the come-off prevention engaging portion constructed by a combination of the concavity and the convexity is provided between the outer peripheral surface of the resin-made slide member and the inner surface of the come-off prevention holding portion opposing thereto, the concavity and the convexity engaging with each other in the axial direction so as to prevent the resin-made slide member from coming off from the come-off prevention holding portion, as in claim 2, the resin-made slide member is further hard to come off from the come-off prevention holding portion.

### Effect of the Invention

The present invention achieves the following effects.

In the sealing device in accordance with claim 1 of the present invention, since the shaft comes into close contact with the resin-made slide members fitted to the inner periphery of the bumper portions in place of the rubber-made bumper portion, at a time when the shaft becomes eccentric, it is possible to suppress the generation of the squealing noise due to the contact between the shaft and the rubber. Further, since the resin-made slide members are fitted to the come-off prevention holding portions provided on the inner peripheral surface of the bumper portions without being bonded, it is possible to omit the bake bonding process at a time of attaching. Therefore, it is possible to make the attaching work of the slide member easier.

Further, since the slide members fitted to the bumper portions are not necessary to be formed in a thin film shape like as the slide member attached to the bumper portion by bake bonding, and can be enlarged in their sectional shape, and since the slide members having the enlarged sectional shape are hard to be deformed, the slide members achieve a function of reinforcing the bumper portions. Therefore, in accordance with claim 1, it is possible to provide a bumper portion reinforcing effect to the resin-made slide members in place of the conventional reinforcing ring (since the resin-made slide member is provided, it is possible to achieve the same bumper portion reinforcing effect without provision of the reinforcing ring as that in the case of the reinforcing ring being provided).

Further, in the sealing device in accordance with claim 1 of the present invention, since the double sound insulating film structure constructed by the first molded product and the second molded product is realized, in addition to an achievement of the above mentioned effect, it is possible to achieve an excellent sound shielding effect.

Further, in the sealing device in accordance with claim 1 of the present invention, in addition to an achievement of the same effects as those mentioned above, since the resin-made slide member of the one molded product installed at the back position is enlarged in size, it is possible to improve the installing workability (since the slide member becomes hard to be deformed and easy to be handled by being enlarged, it is possible to improve the installing workability). Further, one resin-made slide member is provided with the taper shape in its inner peripheral surface so that a part of the inner peripheral surface comes into contact with the shaft, the contact area with the shaft is not increased and the sliding resistance is not increased even if the slide member is enlarged in size.

Further, in the sealing device in accordance with claim 2 of the present invention, since the come-off prevention engaging portion constructed by a combination of the concavity and the convexity is provided between the outer peripheral surface of the resin-made slide member and the inner surface of the come-off prevention holding portion opposing thereto, the concavity and the convexity engaging with each other in the axial direction so as to prevent the resin-made slide member from coming off from the come-off prevention holding portion, the resin-made slide member is further hard to come off from the come-off prevention holding portion. Accordingly, it is possible to provide the sealing device having the structure in which the attaching work of the resin-made slide member is easy as mentioned above, and the once attached resin-made slide member is hard to come off.

### BRIEF EXPLANATION OF DRAWINGS

Fig. 1 is a half-cut sectional view of a sealing device in accordance with a first explanatory example;
Fig. 2 is a half-cut sectional view of a sealing device in accordance with a first embodiment of the present invention;
Fig. 3 is a half-cut sectional view of a sealing device in accordance with a second embodiment of the present invention;
Fig. 4 is an enlarged view of a substantial part of Fig. 3;
Fig. 5 is a half-cut sectional view of a sealing device in accordance with a second explanatory example;
Fig. 6 is a half-cut sectional view of a sealing device in accordance with a third explanatory example;
Fig. 7 is a half-cut sectional view of a sealing device in accordance with a prior art;
Fig. 8 is a half-cut sectional view of a sealing device in accordance with another prior art; and
Fig. 9 is a half-cut sectional view of a sealing device in accordance with another prior art.

### Description of Reference Numerals

1 sealing device
11 molded product (first molded product)
12 outer peripheral attaching portion
13 metal ring
14 rubber-like elastic body
15 flexible portion
16 bumper portion
16a, 26a projection-shaped engaging portion
17 seal lip portion
18 sub seal lip portion
19 come-off prevention holding portion
19e, 20e taper portion
19f collar portion
20 slide member
20a, 30a cylindrical surface
20b taper shape
20c groove-shaped engaging portion
21 second molded product
22 second attaching portion
23 second metal ring
24 second rubber-like elastic body
25 second flexible portion
26 second bumper portion
27 second seal lip portion
29 second come-off prevention holding portion
30 second slide member
41 come-off prevention engaging portion
42 convex portion
43 concave portion
42a, 43a, 42b, 43b surface

### DETAILED DESCRIPTION OF PREFERRED EMBODIMENT

Next, a description will be given of explanatory examples and embodiments in accordance with the present invention with reference to accompanying drawings.

### First Explanatory Example

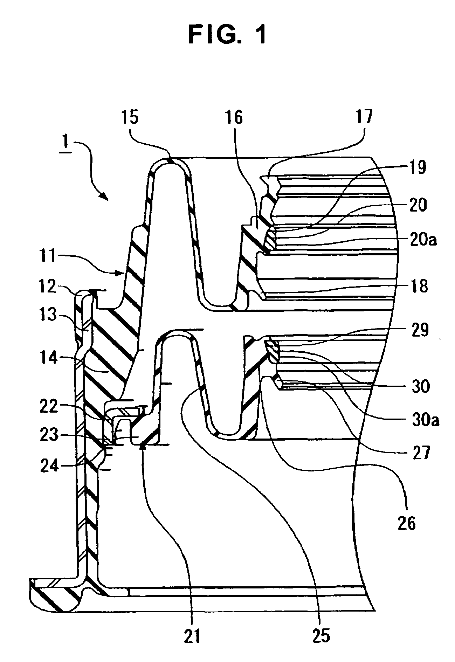

Fig. 1 shows a section of a sealing device 1 in accordance with a first explanatory example. The sealing device 1 is used as a steering dust seal in a vehicle such as a motor vehicle, for sealing between a housing and a steering shaft which is a shaft inserted to the housing (none of them being illustrated).

The sealing device 1 has a molded product 11 obtained by integrally forming a bumper portion 16 and a seal lip portion 17 at an inner peripheral side of an outer peripheral attaching portion 12 fixed to the housing via a bellows-shaped flexible portion 15, a come-off prevention holding portion 19 is provided on an inner peripheral surface of the bumper portion 16, and a resin-made slide member 20 is fitted to the come-off prevention holding portion 19. Further, the sealing device 1 has a second molded product 21 obtained by integrally forming a second bumper portion 26 at an inner peripheral side of a second attaching portion 22 fixed to the outer peripheral attaching portion 12 of the first molded product 11 via a second flexible portion 25, in addition to the first molded product 11 obtained by integrally forming the bumper portion 16 and the seal lip portion 17 at the inner peripheral side of the outer peripheral attaching portion 12 fixed to the housing via the bellows-shaped flexible portion 15, come-off prevention holding portions 19 and 29 are respectively provided on inner peripheral surfaces of the bumper portion 16 of the first molded product 11 and the second bumper portion 26 of the second molded product 21, and resin-made slide members 20 and 30 are respectively fitted to the come-off prevention holding portions 19 and 29.

Details of each of the portions and each of the parts are set as follows.

Firstly, in the first molded product 11, the outer peripheral attaching portion (the first outer peripheral attaching portion) 12 installed to an inner periphery of a shaft hole of the housing has a metal ring (a first metal ring) 13 and a rubber-like elastic body (a first rubber-like elastic body) 14 which is bonded via vulcanization to an inner peripheral surface thereof, an annular flexible portion (a first flexible portion) 15 having a bellows shape is integrally formed toward an inner side in a radial direction at an inner peripheral side of the rubber-like elastic body 14, an annular bumper portion (a first bumper portion) 16 is integrally formed on an inner peripheral end portion of the flexible portion 15, and an annular seal lip portion (a first seal lip portion) 17 is integrally formed toward one side in the axial direction (upward in the figure, an engine room side) on the bumper portion 16. Further, an annular sub seal lip portion 18 is integrally formed toward the other side in the axial direction (downward in the figure, a driver seat side) on an inner peripheral surface of the flexible portion 15, and a come-off prevention holding portion (a first come-off prevention holding portion) 19 having an annular groove shape is provided on an inner peripheral surface of the bumper portion 16 so as to be positioned at an intermediate place between the seal lip portion 17 and the sub seal lip portion 18.

In the second molded product 21, the second attaching portion (the second outer peripheral attaching portion) 22 installed to the inner peripheral surface of the rubber-like elastic body 14 in the outer peripheral attaching portion 12 of the first molded product 11 has a second metal ring 23 and a second rubber-like elastic body 24 bonded via vulcanization to an inner peripheral surface thereof, an annular second flexible portion 25 having a bellows shape is integrally formed toward an inner side in a radial direction at an inner peripheral side of the second rubber-like elastic body 24, an annular second bumper portion 26 is integrally formed on an inner peripheral end portion of the second flexible portion 25, and an annular second seal lip portion 27 is integrally formed toward the other side in an axial direction on an inner peripheral surface of the second bumper portion 26. Further, a second come-off prevention holding portion 29 having an annular groove shape is provided on an inner peripheral surface of the second bumper portion 26 so as to be positioned at one side in an axial direction of the second seal lip portion 27.

The resin-made slide member 20 is fitted, without being bonded, to the come-off prevention holding portion 19 provided on the inner peripheral surface of the bumper portion 16 in the first molded product 11, and the resin-made second slide member 30 is fitted, without being bonded, to the second come-off prevention holding portion 29 provided on the inner peripheral surface of the second bumper portion 26 in the second molded product 21. These slide members 20 and 30 are both formed in an annular shape by a predetermined resin, are formed to have inner peripheral surfaces in a cylindrical surface shape, and are structured such that the cylinder surfaces 20a and 30a come into contact with a crank shaft.

In the sealing device 1 having the structure mentioned above, the crank shaft comes into close contact with the resin-made slide members 20 and 30 fitted to the come-off prevention holding portions 19 and 29 provided on the inner peripheral surfaces of the rubber-made bumper portion 16 and the second bumper portion 26, when the crank shaft becomes eccentric, in place of the rubber-made bumper portion 16 and the second bumper portion 26 themselves. Accordingly, since the shaft does not strongly rasp with the rubber, it is possible to suppress generation of a stick slip, whereby it is possible to suppress generation of a squealing noise. Further, since the resin-made slide members 20 and 30 are fitted without being bonded to the come-off prevention holding portions 19 and 29 provided on the inner peripheral surfaces of the bumper portion 16 and the second bumper portion 26, it is possible to omit a bake bonding process, whereby it is possible to make an attaching work easier. Since the slide members 20 and 30 are held to the come-off prevention holding portions 19 and 29 having the annular groove shapes in spite of being not bonded, they do not fall away from the bumper portion 16 and the second bumper portion 26.

Further, it is not necessary to form the slide members 20 and 30, which are fitted without being bonded to the come-off prevention holding portions 19 and 29 provided on the inner peripheral surfaces of the bumper portion 16 and the second bumper portion 26, in a thin film shape like as the conventional slide member which is bonded to the bumper portion by bake bonding, their sectional shapes can be enlarged, the slide members 20 and 30 having the enlarged sectional shapes are hard to be deformed, and thereby an effect of reinforcing the bumper portion 16 and the second bumper portion 26 can be achieved. Therefore, in accordance with the sealing device 1, a reinforcing effect of the bumper portion 16 and the second bumper portion 26 can be provided to the resin-made slide members 20 and 30, in place of the conventional reinforcing ring (Fig. 8), and it is possible to reinforce the bumper portion 16 and the second bumper portion 26 so as to improve their eccentricity following characteristic, without embedding the reinforcing ring therein. Further, in the reinforced bumper portion 16 and second bumper portion 26, an error in roundness and dimensional precision at a time of formation can be reduced.

Further, in accordance with the sealing device 1, since a double sound shielding film structure is constructed by the first molded product 11 and the second molded product 21 having the structure mentioned above, it is possible to achieve an excellent sound shielding effect. A noise generated at the engine room side, one side in the axial direction, is first shielded by the first molded product 11, and is next shielded by the second molded product 21.

### First Embodiment

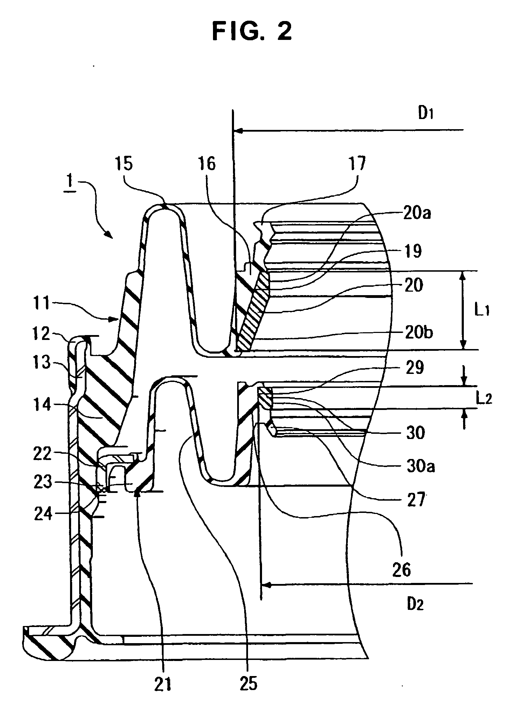

Fig. 2 shows a section of a sealing device 1 in accordance with a first embodiment of the present invention, and the sealing device 1 is used as a steering dust seal for sealing between a housing and a steering shaft which is a shaft inserted to the housing (none of them being illustrated).

The sealing device 1 has a molded product 11 obtained by integrally forming a bumper portion 16 and a seal lip portion 17 at an inner peripheral side of an outer peripheral attaching portion 12 fixed to the housing via a bellows-shaped flexible portion 15, a come-off prevention holding portion 19 is provided on an inner peripheral surface of the bumper portion 16, and a resin-made slide member 20 is fitted to the come-off prevention holding portion 19. Further, the sealing device 1 has a second molded product 21 obtained by integrally forming a second bumper portion 26 at an inner peripheral side of a second attaching portion 22 fixed to the outer peripheral attaching portion 12 of the first molded product 11 via a second flexible portion 25, in addition to the first molded product 11 obtained by integrally forming the bumper portion 16 and the seal lip portion 17 at the inner peripheral side of the outer peripheral attaching portion 12 fixed to the housing via the bellows-shaped flexible portion 15, come-off prevention holding portions 19 and 29 are respectively provided on inner peripheral surfaces of the bumper portion 16 of the first molded product 11 and the second bumper portion 26 of the second molded product 21, and resin-made slide members 20 and 30 are respectively fitted to the come-off prevention holding portions 19 and 29. Further, the resin-made slide member 20 provided in the first molded product 11 has a length in an axial direction and an outer diameter which are larger than those of the resin-made slide member 30 provided in the second molded product 21, and has a taper shape 20b in an inner peripheral surface so that a part of an inner periphery surface thereof comes into contact with the crank shaft.

Details of each of the portions and each of the parts are set as follows.

Firstly, in the first molded product 11, the outer peripheral attaching portion (the first outer peripheral attaching portion) 12 installed to an inner periphery of a shaft hole of the housing has a metal ring (a first metal ring) 13 and a rubber-like elastic body (a first rubber-like elastic body) 14 which is bonded via vulcanization to an inner peripheral surface thereof, an annular flexible portion (a first flexible portion) 15 having a bellows shape is integrally formed toward an inner side in a radial direction at an inner peripheral side of the rubber-like elastic body 14, an annular bumper portion (a first bumper portion) 16 is integrally formed on an inner peripheral end portion of the flexible portion 15, and an annular seal lip portion (a first seal lip portion) 17 is integrally formed toward one side in the axial direction (upward in the figure, an engine room side) on the bumper portion 16. Further, a come-off prevention holding portion (a first come-off prevention holding portion) 19 having an annular groove shape is provided on inner peripheral surfaces of the bumper portion 16 and the flexible portion 15 so as to be positioned at the other side in an axial direction of the seal lip portion 17 (lower side in the figure, a driver seat side).

In the second molded product 21, the second attaching portion (the second outer peripheral attaching portion) 22 installed to the inner peripheral surface of the rubber-like elastic body 14 in the outer peripheral attaching portion 12 of the first molded product 11 has a second metal ring 23 and a second rubber-like elastic body 24 bonded via vulcanization to an inner peripheral surface thereof, an annular second flexible portion 25 having as a bellows shape is integrally formed toward an inner side in a radial direction at an inner peripheral side of the second rubber-like elastic body 24, an annular second bumper portion 26 is integrally formed on an inner peripheral end portion of the second flexible portion 25, and an annular second seal lip portion 27 is integrally formed toward the other side in an axial direction on an inner peripheral surface of the second bumper portion 26. Further, a second come-off prevention holding portion 29 having an annular groove shape is provided on an inner peripheral surface of the second bumper portion 26 so as to be positioned at one side in an axial direction of the second seal lip portion 27.

The resin-made slide member 20 is fitted, without being bonded, to the come-off prevention holding portion 19 provided on the inner peripheral surfaces of the bumper portion 16 and the flexible portion 15 in the firstmoldedproduct 11, and the resin-made second slide member 30 is fitted, without being bonded, to the second come-off prevention holding portion 29 provided on the inner peripheral surface of the second bumper portion 26 in the second molded product 21.

These slide members 20 and 30 are both formed in an annular shape by a predetermined resin, and inner diameters thereof are set to the same size with each other. However, one resin-made slide member 20 provided in the first molded product 11 is set such that a length in an axial direction and an outer diameter are larger than those of the other resin-made slide member 30 provided in the second molded product 21, and consequently a sectional area thereof is set larger. In particular, they are set such as to satisfy relations of L1 > L2 and D1 > D2, where L1 is the length in the axial direction of one slide member 20, D1 is the outer diameter thereof, L2 is the length in the axial direction of the other slide member 30, and D2 is the outer diameter thereof.

Further, the inner peripheral surface of this one resin-made slide member 20 is formed in a cylindrical surface shape at one end portion in the axial direction, and is structured such that a cylindrical surface 20a comes into contact with the crank shaft, while the other portion is formed as a taper shape 20b which expands in its diameter little by little toward the other side in the axial direction, and is structured such that the shaft does not directly come into contact therewith even if the shaft becomes eccentric. On the contrary, the inner peripheral surface of the other resin slide member 30 is formed in a cylindrical surface shape over a whole surface thereof, and is structured such that the whole surface of a cylindrical surface 30a comes into contact with the crank shaft.

Since one slide member 20 of the molded product 11 installed to the back position is enlarged in size, installing workability of the sealing device 1 having the structure mentioned above can be improved, in addition that the same operational effects as those of the first embodiment can be achieved. Further, since this one slide member 20 has the cylindrical surface 20a and the taper shape 20b in its inner peripheral surface and is structured such that only the former cylindrical surface 20a comes into contact with the crank shaft, a contact area with the crank shaft is not increased even though it is enlarged in size. Accordingly, it is possible to suppress an increase of the contact area and an increase of the sliding resistance.

### Second Embodiment

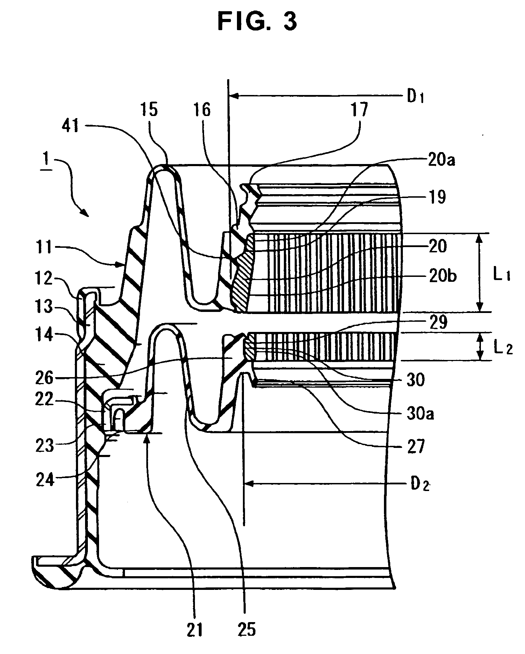

Fig. 3 shows a section of a sealing device 1 in accordance with a second embodiment of the present invention, and the sealing device 1 is used as a steering dust seal for sealing between a housing and a steering shaft which is a shaft inserted to the housing (none of them being illustrated).

The sealing device 1 has a molded product 11 obtained by integrally forming a bumper portion 16 and a seal lip portion 17 at an inner peripheral side of an outer peripheral attaching portion 12 fixed to the housing via a bellows-shaped flexible portion 15, a come-off prevention holding portion 19 is provided on an inner peripheral surface of the bumper portion 16, and a resin slide-made member 20 is fitted to the come-off prevention holding portion 19. Further, the sealing device 1 has a second molded product 21 obtained by integrally forming a second bumper portion 26 at an inner peripheral side of a second attaching portion 22 fixed to the outer peripheral attaching portion 12 of the first molded product 11 via a second flexible portion 25, in addition to the first molded product 11 obtained by integrally forming the bumper portion 16 and the seal lip portion 17 at the inner peripheral side of the outer peripheral attaching portion 12 fixed to the housing via the bellows-shaped flexible portion 15, come-off prevention holding portions 19 and 29 are respectively provided on inner peripheral surfaces of the bumper portion 16 of the first molded product 11 and the second bumper portion 26 of the second molded product 21, and resin-made slide members 20 and 30 are respectively fitted to the come-off prevention holding portions 19 and 29. Further, the resin-made slide member 20 provided in the first molded product 11 has a length in an axial direction and an outer diameter which are larger than those of the resin-made slide member 30 provided in the second molded product 21, and has a taper shape 20b in its inner peripheral surface so that in a part of an inner periphery surface thereof comes into contact with the crank shaft. Further, a come-off prevention engaging portion 41 constructed by a combination of a concavity and a convexity is provided between the outer peripheral surface of the resin-made slide member 20 provided in the first molded product 11 and the inner surface of the come-off prevention holding portion 19 opposing thereto, the concavity and the convexity engaging with each other in the axial direction so as to prevent the resin-made slide member 20 from falling away from the come-off prevention holding portion 19.

Details of each of the portions and each of the parts are set as follows.

Firstly, in the first molded product 11, the outer peripheral attaching portion (the first outer peripheral attaching portion) 12 installed to an inner periphery of a shaft hole of the housing has a metal ring (a first metal ring) 13 and a rubber-like elastic body (a first rubber-like elastic body) 14 which is bonded via vulcanization to an inner peripheral surface thereof, an annular flexible portion (a first flexible portion) 15 having a bellows shape is integrally formed toward an inner side in a radial direction at an inner peripheral side of the rubber-like elastic body 14, an annular bumper portion (a first bumper portion) 16 is integrally formed on an inner peripheral end portion of the flexible portion 15, and an annular seal lip portion (a first seal lip portion) 17 is integrally formed toward one side in the axial direction (upward in the figure, an engine room side) on the bumper portion 16. Further, a come-off prevention holding portion (a first come-off prevention holding portion) 19 having an annular groove shape is provided on inner peripheral surfaces of the bumper portion 16 and the flexible portion 15 so as to be positioned at the other side in an axial direction of the seal lip portion 17 (lower side in the figure, a driver seat side).

In the second molded product 21, the second attaching portion (the second outer peripheral attaching portion) 22 installed to the inner peripheral surface of the rubber-like elastic body 14 in the outer peripheral attaching portion 12 of the first molded product 11 has a second metal ring 23 and a second rubber-like elastic body 24 bonded via vulcanization to an inner peripheral surface thereof, an annular second flexible portion 25 having a bellows shape is integrally formed toward an inner side in a radial direction at an inner peripheral side of the second rubber-like elastic body 24, an annular second bumper portion 26 is integrally formed on an inner peripheral end portion of the second flexible portion 25, and an annular second seal lip portion 27 is integrally formed toward the other side in an axial direction on an inner peripheral surface of the second bumper portion 26. Further, a second come-off prevention holding portion 29 having an annular groove shape is provided on an inner peripheral surface of the second bumper portion 26 so as to be positioned at one side in an axial direction of the second seal lip portion 27.

The resin-made slide member 20 is fitted, without being bonded, to the come-off prevention holding portion 19 provided on the inner peripheral surfaces of the bumper portion 16 and the flexible portion 15 in the first molded product 11, and the resin-made second slide member 30 is fitted, without being bonded, to the second come-off prevention holding portion 29 provided on the inner peripheral surface of the second bumper portion 26 in the second molded product 21.

These slide members 20 and 30 are both formed in the annular shape by a predetermined resin, and inner diameters thereof are set to the same size with each other. However, one resin-made slide member 20 provided in the first molded product 11 is set such that a length in an axial direction and an outer diameter are larger than those of the other resin-made slide member 30 provided in the second molded product 21, and consequently a sectional area thereof is set larger. In particular, they are set such as to satisfy relations of L1 > L2 and D1 > D2, where L1 is the length in the axial direction of the one slide member 20, D1 is the outer diameter thereof, L2 is the length in the axial direction of the other slide member 30, and D2 is the outer diameter thereof.

Further, the inner peripheral surface of the one resin-made slide member 20 is formed in a cylindrical surface shape at one end portion in the axial direction, and is structured such that a cylindrical surface 20a comes into contact with the crank shaft, while the other portion is formed as a taper shape 20b which expands in its diameter little by little toward the other side in the axial direction, and is structured such that the shaft does not directly come into contact therewith even if the shaft becomes eccentric. On the contrary, the inner peripheral surface of the other resin-made slide member 30 is formed in a cylindrical surface shape over the whole surface thereof, and is structured such that the whole surface of a cylindrical surface 30a comes into contact with the crank shaft.

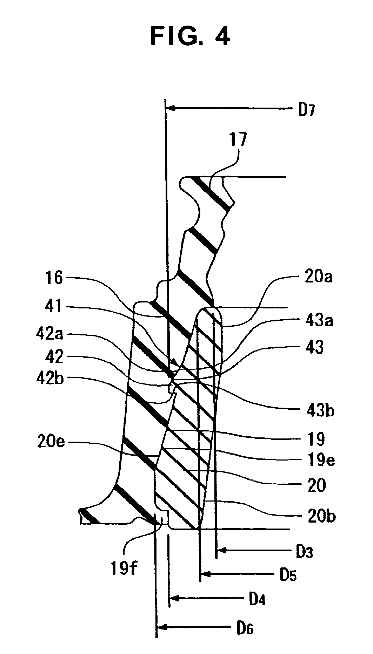

Further, as shown in Fig. 4 in an enlarged manner, one resin-made slide member 20 provided in the first molded product 11 is formed in such a taper shape that a part or the whole (a part in the figure) of an outer peripheral surface expands in diameter little by little from one side in the axial direction toward the other side in the axial direction (the tapered portion being denoted by reference symbol 20e), and the come-off prevention holding portion 19 opposing thereto is formed in such a taper shape that a part or the whole (a part in the figure) of an inner surface (an inner peripheral surface) thereof expands in diameter little by little from one side in the axial direction toward the other side in the axial direction (the taper portion being denoted by reference symbol 19e). Further, the inner peripheral surface of the bumper portion 16 is formed in a taper shape which expands in diameter little by little from one side in the axial direction toward the other side in the axial direction (a relation of D3 < D4 is established, where an inner diameter of one end portion in the axial direction of in the bumper portion 16 is D3, and an inner diameter of the other end portion in the axial direction thereof is D4). Accordingly, the come-off prevention holding portion 19 is formed in a taper shape which inclines in the same direction (a relation of D5 < D6 is established, where an inner diameter of one end portion in the axial direction of the come-off prevention holding portion 19 is D5, and an inner diameter of the other end portion in the axial direction thereof is D6). Since a depth of the come-off prevention holding portion 19 serving as a groove is set approximately constant all over a whole length in the axial direction, the resin-made slide member 20 is set such as to be easily fitted to the come-off prevention holding portion 19 from the other side in the axial direction (a lower side in the figure), however, there is anxiety that the resin-made slide member 20 tends to fall away from the come-off prevention holding portion 19 to the other side in the axial direction.

Accordingly, in order to prevent the falling, the come-off prevention engaging portion 41 the constructed by a combination of the concavity and convexity is provided on the outer peripheral surface of the resin-made slide member 20 and the inner surface (the inner peripheral surface) of the come-off prevention holding portion 19 opposing thereto, the concavity and the convexity engaging with each other in the axial direction so as to prevent the resin-made slide member 20 from falling away from the come-off prevention holding portion 19. The come-off prevention engaging portion 41 is constructed by a convex portion 42 integrally provided on the outer peripheral surface of the resin-made slide member 20 and a concave portion 43 provided on the inner surface (the inner peripheral surface) of the come-off prevention holding portion 19, as in the figure. Both the convex portion 42 and the concave portion 43 are formed in an annular shape, and sectional shapes thereof are set in a "barb" shape so as to make the resin-made slide member 20 to be easily fitted to the come-off prevention holding portion 19 from the other side in the axial direction but make it hard to fall away from the come-off prevention holding portion 19 to the other side in the axial direction. In particular, the convex portion 42 and the concave portion 43 have surfaces (engaging surfaces) 42a and 43a at one side in the axial direction which have comparatively gentle angles of inclination so as to make it easy to be fitted, and surfaces (engaging surfaces) 42b and 43b at the other side in the axial direction which have comparatively sharp angles of inclination or perpendicular to the axis so as to make it hard to come off.

Since one slide member 20 of the molded product 11 installed to the back position is enlarged in size and the outer peripheral surface thereof is formed in the taper shape, installing workability of the sealing device 1 having the structure mentioned above can be improved in addition that the same operational effects as those of the first explanatory example can be achieved. Further, since this one slide member 20 has the cylindrical surface 20a and the taper shape 20b in its inner peripheral surface and is structured such that only the former cylindrical surface 20a comes into contact with the crank shaft, a contact area with the crank shaft is not increased even though it is enlarged in size. Accordingly, it is possible to suppress an increase of the contact area and an increase of the sliding resistance.

Further, since the come-off prevention engaging portion 41 constructed by a combination of the concavity and convexity is provided on the outer peripheral surface of the resin-made slide member 20 and the inner surface of the come-off prevention holding portion 19 opposing thereto, the concavity and the convexity engaging with each other in the axial direction so as to prevent the resin-made slide member 20 from falling away from the come-off prevention holding portion 19, it is possible to achieve such an operational effect that the resin-made slide member 20 is made further hard to fall away from the come-off prevention holding portion 19.

In this case, key points in the second embodiment will be summarized as follows.
(A) The sealing device 1 is a sealing device (a dust seal for a steering) 1 for sealing between the housing and the shaft (the steering shaft) inserted to the housing, and has the first molded product 11 obtained by integrally forming the bumper portion 16 and the seal lip portion 17 at the inner peripheral side of the outer peripheral attaching portion 12 fixed to the housing via the bellows-shaped flexible portion 15, and the second molded product 21 obtained by integrally forming the second bumper portion 26 at the inner peripheral side of the second attaching portion 22 fixed to the outer peripheral attaching portion 12 via the second flexible portion 25. At a time of installing, the first molded product 11 is arranged at the one side in the axial direction (the engine room side), and the second molded product 21 is arranged at the other side in the axial direction (the driver seat side).
(B) The come-off prevention holding portions 19 and 29 are respectively provided on the inner peripheral surfaces of the bumper portion 16 and the second bumper portion 26, and the resin-made slide members 20 and 30 are respectively fitted, without being bonded, to provided in the come-off prevention holding portions 19 and 29.
(C) The resin-made slide member 20 provided in the first molded product 11 has the length L1 in the axial direction and the outer diameter D1 which are larger than those of the resin-made slide member 30 provided in the second molded product 21, and has the taper shape 20b in the inner peripheral surface so that a part of the inner peripheral surface comes into contact with the shaft. Accordingly, the cylindrical surface 20a which comes into contact with the shaft is provided at one side in the axial direction, in the inner peripheral surface of the resin-made slide member 20, and the taper shape 20b which expands in diameter little by little from the one side in the axial direction toward the other side is continuously provided at the other side in the axial direction of the cylindrical surface 20a. The diameter of the cylindrical surface 20a is set somewhat larger than the diameter of the shaft, comes into contact with the shaft so as to follow eccentricity when the shaft becomes eccentric, and stabilizes a contact state of the seal lip portion 17 with the shaft. On the other hand, the taper shape 20b remains in a non-contact state with the shaft even when the shaft becomes eccentric.
(D) The taper portion 20e which expands in diameter little by little from the one side in the axial direction toward the other side in the axial direction is provided in the outer peripheral surface of the resin-made slide member 20. On the other hand, the inner peripheral surface of the bumper portion 16 is formed in the taper shape which is inclined in the same direction (expands in diameter), the come-off prevention holding portion 19 is also formed in the taper shape which is inclined in the same direction (expands in diameter), and the groove depth of the come-off prevention holding portion 19 is set approximately constant all over a whole length in the axial direction. Further, the inner periphery (the inner peripheral surface) of the come-off prevention holding portion 19 opposing to the outer peripheral surface of the resin-made slide member 20 has the taper portion 19e which is inclined in the same direction (expands in diameter). The come-off preventing collar portion 19f is provided on the end portion at the other side in the axial direction of the come-off prevention holding portion 19, the inner diameter D4 thereof is set to be larger than the outer diameter D5 of the end portion at the one side in the axial direction of the resin-made slide member 20, and to be smaller than the outer diameter D6 of the end portion at the other side in the axial direction of the resin-made slide member 20 (D6 > D4 > D5). Accordingly, the resin-made slide member 20 is structured such as to be easily fitted to the come-off prevention holding portion 19 from the other side in the axial direction.
(E) In this case, since there is anxiety that it is easily to fall away if it becomes easy to fit, the come-off prevention engaging portion 41 constructed by a combination of the concavity and the convexity is provided between the outer peripheral surface of the resin-made slide member 20 and the inner surface (the inner peripheral surface) of the come-off prevention holding portion 19 opposing thereto, for preventing the resin-made slide member 20 from falling away from the come-off prevention holding portion 19 on the basis of the engagement with each other in the axial direction. Accordingly, it is easy to carry out the attaching work of the resin-made slide member 20 because of the fitting structure without bonding, and it is possible to achieve such the structure that the once attached resin-made slide member 20 is hard to fall away.
(F) In this case, since the convex portion 42 integrally provided on the outer peripheral surface of the resin-made slide member 20 for constructing the come-off prevention engaging portion 41 is set to such a dimension that the outer diameter D7 thereof is equal to or less than the inner diameter D4 of the come-off preventing collar portion 19f (D7 ≦ D4), so that the convex portion 42 smoothly passes through the inner periphery of the collar portion 19f at a time of fitting the resin-made slide member 20 to the come-off prevention holding portion 19, and there is thus no obstacle to the attaching work.

### Second Explanatory Example

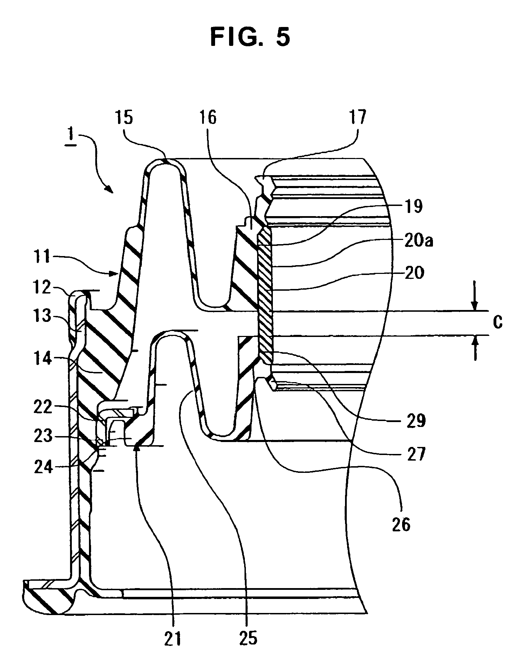

Fig. 5 shows a section of a sealing device 1 in accordance with a second explanatory example, and the sealing device 1 is used as a steering dust seal for sealing between a housing and a steering shaft which is a shaft inserted to the housing (none of them being illustrated).

The sealing device 1 has a molded product 11 obtained by integrally forming a bumper portion 16 and a seal lip portion 17 at an inner peripheral side of an outer peripheral attaching portion 12 fixed to the housing via a bellows-shaped flexible portion 15, a come-off prevention holding portion 19 is provided on an inner peripheral surface of the bumper portion 16, and a resin-made slide member 20 is fitted to the come-off prevention holding portion 19. Further, the sealing device 1 has a second molded product 21 obtained by integrally forming a second bumper portion 26 at an inner peripheral side of a second attaching portion 22 fixed to the outer peripheral attaching portion 12 of the first molded product 11 via a second flexible portion 25, in addition to the first molded product 11 obtained by integrally forming the bumper portion 16 and the seal lip portion 17 at the inner peripheral side of the outer peripheral attaching portion 12 fixed to the housing via the bellows-shaped flexible portion 15, come-off prevention holding portions 19 and 29 are respectively provided on inner peripheral surfaces of the bumper portion 16 of the first molded product 11 and the second bumper portion 26 of the second molded product 21, and single resin-made slide member 20 is fitted to both the come-off prevention holding portions 19 and 29.

Details of each of the portions and each of the parts are set as follows.

Firstly, in the first molded product 11, the outer peripheral attaching portion (the first outer peripheral attaching portion) 12 installed to an inner periphery of a shaft hole of the housing has a metal ring (a first metal ring) 13 and a rubber-like elastic body (a first rubber-like elastic body) 14 which is bonded via vulcanization to an inner peripheral surface thereof, an annular flexible portion (a first flexible portion) 15 having a bellows shape is integrally formed toward an inner side in a diametrical direction at an inner peripheral side of the rubber-like elastic body 14, an annular bumper portion (a first bumper portion) 16 is integrally formed on an inner peripheral end portion of the flexible portion 15, and an annular seal lip portion (a first seal lip portion) 17 is integrally formed toward one side in the axial direction (upward in the figure, an engine room side) on the bumper portion 16. Further, a come-off prevention holding portion (a first come-off prevention holding portion) 19 having an annular step shape is provided on inner peripheral surfaces of the bumper portion 16 and the flexible portion 15 so as to be positioned at the other side in an axial direction of the seal lip portion 17 (lower side in the figure, a driver seat side).

In the second molded product 21, the second attaching portion (the second outer peripheral attaching portion) 22 installed to the inner peripheral surface of the rubber-like elastic body 14 in the outer peripheral attaching portion 12 of the first molded product 11 has a second metal ring 23 and a second rubber-like elastic body 24 bonded via vulcanization to an inner peripheral surface thereof, an annular second flexible portion 25 having as a bellows shape is integrally formed toward an inner side in a diametrical direction at an inner peripheral side of the second rubber-like elastic body 24, an annular second bumper portion 26 is integrally formed on an inner peripheral end portion of the second flexible portion 25, and an annular second seal lip portion 27 is integrally formed toward the other side in an axial direction on an inner peripheral surface of the second bumper portion 26. Further, a second come-off prevention holding portion 29 having an annular step shape is provided on an inner peripheral surface of the second bumper portion 26 so as to be positioned at one side in an axial direction of the second seal lip portion 27.

The come-off prevention holding portion 19 provided on the inner peripheral surfaces of the bumper portion 16 and the flexible portion 15 in the first molded product 11, and the second come-off prevention holding portion 29 provided on the inner peripheral surface of the second bumper portion 26 in the second molded product 21 are formed in step shapes which are respectively open at the other side or one side in the axial direction, and are set in such a state as to face to each other in the axial direction, and the resin-made slide member 20 is fitted, without being bonded, to a pair of holding portions 19 and 29 facing to each other. Since the slide member 20 is set such that the length in the axial direction is comparatively large, the slide member 20 is fitted to be bridged between both the holding portions 19 and 29, and a gap c in an axial direction is formed between the bumper portion 16 of the first molded product 11 and the second bumper portion 26 of the second molded product 21. A size of the gap c in the axial direction increases and decreases in correspondence to the length in the axial direction of the slide member 20. The slide member 20 is formed in an annular shape (a tubular shape) by a predetermined resin, has an inner peripheral surface formed in a cylindrical shape, and is structured such that the cylinder surface 20a comes into contact with the crank shaft. In the case that it is necessary to reduce a contact area because the length in the axial direction is large as mentioned above, the inner peripheral surface may be provided with a groove or a concave portion, or a taper shape as in the second embodiment.

Since the single slide member 20 is arranged in state of being bridged between the bumper portion 16 of the first molded product 11 and the second bumper portion 26 of the second molded product 21, the sealing device 1 having the structure mentioned above can be made with the reduced number of parts, in addition that the same operational effects as those of the first embodiment can be achieved. Since the bumper portion 16 of the first molded product 11 and the second bumper portion 26 of the second molded product 21 can be coupled to each other via the slide member 20, it is possible to increase a rigidity. Further, since the bumper portion 16 of the first molded product 11 and the second bumper portion 26 of the second molded product 21 are structured such that they can be displaced in the axial direction with each other in a state before the slide member 20 is fitted, it is possible to regulate an operating characteristic (a sliding characteristic or the like) by being combined with the slide member 20 having the large length in the axial direction or being combined with the slide member 20 having the small length in the axial direction.

### Third Explanatory Example

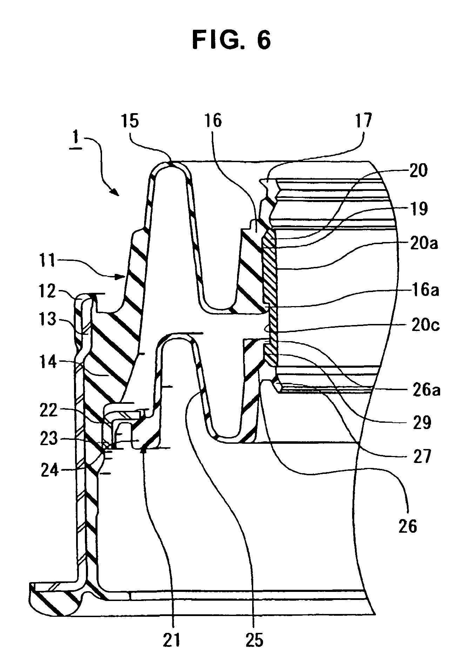

In the second explanatory example mentioned above, the structure is made such that the shapes of the come-off prevention holding portions 19 and 29 are formed in the step shapes and they are arranged to face to each other, however, in the case that a larger come-off preventing force is necessary, the structure may be made, as shown in Fig. 6, such that a groove-shaped engaging portion 20c is provided on the outer peripheral surface of the slide member 20, and projection-shaped engaging portions 16a and 26a for engaging with it are provided on the inner peripheral surfaces of the bumper portion 16 and the inner peripheral attaching portion 26.

Further, as a structure which is common to all the embodiments and explanatory examples, a projection (not shown) may be provided on the inner peripheral surfaces of the resin-made slide members 20 and 30 for reducing a contact area with the shaft so as to further reduce the squealing noise. In this case, it is preferable that a lot of projections which are long in an axial direction are provided at equal intervals. Further, as a material (a kind) of the resin for constructing the slide members 20 and 30, Teflon (trade mark) (PTFE) or the like is employed, however, the material is not particularly limited.

## Claims

1. A sealing device (1) for sealing between a housing and a shaft inserted to said housing, wherein a first molded product (11) obtained by integrally forming a bumper portion (16) and a seal lip portion (17) via a bellows-shaped second flexible portion (15) is provided at an inner peripheral side of an outer peripheral attaching portion (12) fixed to said housing, and a second molded product (21) obtained by integrally forming a second bumper portion (26) via a bellows-shaped second flexible portion (25) is provided at an inner peripheral side of a second attaching portion (22) fixed to said outer peripheral attaching portion (12), and
come-off prevention holding portions (19, 29) are respectively provided on inner peripheral surfaces of said bumper portion (16) and the second bumper portion (26), and squealing noise preventing resin-made slide members (20, 30) are respectively fitted to said come-off prevention holding portions, **characterized in that**
the resin-made slide member (20) provided in the first molded product (11) has a length in an axial direction and an outer diameter which are larger than those of the resin-made slide member (30) provided in the second molded product (21), and has a taper shape in said inner peripheral surface so that a part of the inner peripheral surface comes into contact with the shaft.

2. A sealing device as claimed in claim 1, **characterized in that** a come-off prevention engaging portion (41) constructed by a combination of a concavity (43) and a convexity (42) is provided between an outer peripheral surface of the resin-made low-friction slide member (20) and an inner surface of the come-off prevention holding (19) portion opposing thereto, said concavity (43) and convexity (42) engaging with each other in an axial direction so as to prevent said resin-made low-friction slide member (20) from coming off from said come-off prevention holding portion (19).

3. A sealing device (1) as claimed in claim 1, **characterized in that** the resin-made low friction slide member (20) has a cylindrical surface (20a) and a taper shape (20b) in its inner peripheral surface.

## Patentansprüche

1. Dichtungsvorrichtung (1) zum Abdichten zwischen einem Gehäuse und einer in das Gehäuse eingesetzten Welle, wobei ein erstes Formerzeugnis (11), das durch einstückiges Ausbilden eines Stoßfängerabschnitts (16) und eines Dichtungslippenabschnitt (17) über einen faltenbalgartigen zweiten flexiblen Abschnitt (15) erhalten wird, an einer Innenumfangsseite eines Außenumfangsanbringungsabschnitts (12) vorgesehen ist, der an dem Gehäuse befestigt ist, und ein zweites Formerzeugnis (21), das durch einstückiges Ausbilden eines zweiten Stoßfängerabschnitts (26) über einen faltenbalgartigen zweiten flexiblen Abschnitt (25) erhalten wird, an einer Innenumfangsseite eines zweiten Anbringungsabschnitts (22) vorgesehen ist, der an dem Außenumfangsanbringungsabschnitt (12) befestigt ist, und
Ablöseverhinderungshalteabschnitte (19, 29) jeweils an Innenumfangsflächen des Stoßfängerabschnitts (16) und des zweiten Stoßfängerabschnitts (26) vorgesehen sind, und aus Harz gefertigte Quietschgeräuschverhinderungsgleitelemente (20, 30) jeweils an die Ablöseverhinderungshalteabschnitte gepasst sind, **dadurch gekennzeichnet, dass**
das aus Harz gefertigte Gleitelement (20), das in dem ersten Formerzeugnis (11) vorgesehen ist, eine Länge in einer Achsrichtung und einen Außendurchmesser hat, die größer als jene des aus Harz gefertigten Gleitelements (30) sind, das in dem zweiten Formerzeugnis (21) vorgesehen ist, und eine konische Form in der Innenumfangsfläche hat, sodass ein Teil der Innenumfangsfläche mit der Welle in Kontakt kommt.

2. Dichtungsvorrichtung gemäß Anspruch 1, **dadurch gekennzeichnet, dass** ein Ablöseverhinderungseingriffsabschnitt (41), der durch eine Kombination einer Konkavität (43) und einer Konvexität (42) zwischen einer Außenumfangsfläche des aus Harz gefertigten Niederreibungsgleitelements (20) und einer Innenfläche des Ablöseverhinderungshalteabschnitts (19), der diesem gegenüberliegt, vorgesehen ist, wobei die Konkavität (43) und die Konvexität (42) miteinander in einer Achsrichtung in Eingriff sind, um zu verhindern, dass sich das aus Harz gefertigte Niederreibungsgleitelement (20) von dem Ablöseverhinderungshalteabschnitt (19) ablöst.

3. Dichtungsvorrichtung (1) gemäß Anspruch 1, **dadurch gekennzeichnet, dass** das aus Harz gefertigte Niederreibungsgleitelement (20) eine zylindrische Fläche (20a) und eine konische Form (20b) in seiner Innenumfangsfläche hat.

## Revendications

1. Dispositif d'étanchéité (1) pour assurer une étanchéité entre un boîtier et un arbre inséré audit boîtier, où un premier produit moulé (11), obtenu en formant en un seul bloc une partie d'amortisseur (16) et une partie (17) de lèvre de joint par l'intermédiaire d'une deuxième partie souple (15) en forme de soufflet, est pourvu au niveau d'un côté périphérique interne d'une partie de fixation périphérique externe (12) fixée audit boîtier, et un deuxième produit moulé (21), obtenu en formant en un seul bloc une deuxième partie d'amortisseur (26) par l'intermédiaire d'une deuxième partie souple (25) en forme de soufflet, est pourvu au niveau d'un côté périphérique interne d'une deuxième partie de fixation (22) fixée à ladite partie de fixation périphérique externe (12), et
des parties de maintien (19, 29) empêchant le détachement sont respectivement pourvues sur des surfaces périphériques internes de ladite partie d'amortisseur (16) et de la deuxième partie d'amortisseur (26), et des éléments coulissants (20, 30) réalisés en résine empêchant le grincement sont ajustés respectivement auxdites parties de maintien empêchant le détachement, **caractérisé en ce que**
l'élément coulissant (20) réalisé en résine pourvu dans le premier produit moulé (11) a une longueur dans une direction axiale et un diamètre externe qui sont supérieurs à ceux de l'élément coulissant (30) réalisé en résine pourvu dans le deuxième produit moulé (21), et a une forme de cône dans ladite surface périphérique interne de sorte qu'une partie de la surface périphérique interne vienne en contact avec l'arbre.

2. Dispositif d'étanchéité tel que revendiqué dans la revendication 1, **caractérisé en ce qu'**une partie d'engagement (41) empêchant le détachement réalisée par une combinaison d'une concavité (43) et d'une convexité (42) est pourvue entre une surface périphérique externe de l'élément coulissant (20) à faible frottement réalisé en résine et une surface interne de la partie de maintien (19) empêchant le détachement qui lui est opposée, lesdites concavité (43) et convexité (42) venant en prise l'une avec l'autre dans une direction axiale de manière à empêcher ledit élément coulissant (20) à faible frottement réalisé en résine de se détacher de ladite partie de maintien (19) empêchant le détachement.

3. Dispositif d'étanchéité (1) tel que revendiqué dans la revendication 1, **caractérisé en ce que** l'élément coulissant (20) à faible frottement réalisé en résine a une surface cylindrique (20a) et une forme de cône (20b) dans sa surface périphérique interne.
